# EUROPEAN PATENT APPLICATION

(11) **EP 3 923 256 A1**
(43) Date of publication of application: **15.12.2021**
(21) Application number: 20179252.0
(22) Date of filing: 10.06.2020
(51) Int. Cl.: G07F 19/00, G06Q 20/10

(54) **IMPROVED SECURITY**

(71) Applicant: MasterCard International Incorporated, Purchase, NY 10577-2509 (US)
(72) Inventor: O'Regan, Simon, Cork, P24YX89 (IE)
(74) Representative: Barker Brettell LLP

(57) **Abstract**

A system (100) is provided for improving security. The system (100) comprises: an ATM (110) at which a customer can perform an action; a camera (120) configured to view the customer when they are using the ATM (110) to perform an action; a processing subsystem (130) configured to receive video data from the camera (120), and to process the video data to determine an affective state of the customer; and a decision module (140), configured to receive the affective state determined by the processing subsystem (130), and to take counter measures if the affective state indicates that the customer is under duress.

## Description

### Field of the invention

The present invention relates to a method of improving security, and to systems and software for improving security

### Background

Automatic Teller Machines, or ATMs, are machines from which bank customers can withdraw cash. Fraud and crime at ATMs has existed as long as ATMs have. Indeed, theft of cash at the point of withdrawal and withdrawal under duress (e.g. with the threat of force) pre-dates ATMs.

It would be desirable to improve the security of ATMs, so that customers and their banks are less vulnerable to this form of criminal activity.

### Summary

According to a first aspect of the invention, there is provided a system for improving transaction security, comprising:
an ATM at which a customer can perform an action;
a camera configured to view the customer when they are using the ATM to perform an action;
a processing subsystem configured to receive video data from the camera, and to process the video data to determine an affective state of the customer;
a decision module, configured to receive the affective state determined by the processing subsystem, and to take counter measures if the affective state indicates that the customer is under duress.

The action may be a financial transaction, such as a cash withdrawal, or a transfer of funds between different accounts. Alternatively, the action may comprise changing a card PIN or updating account information. More generally, the action may comprise any action that requires secure customer authentication, including payment card operations.

The ATM may comprise the camera, or the camera may be placed proximate to the ATM (e.g. within 2 metres, within 5 metres, or within 10 metres).

The system may further comprise at least one supplemental sensor with a different sensing modality to the camera. The processing subsystem may receive supplemental data from the at least one supplemental sensor in addition to the video data, and determine the affective state of the customer in dependence on both the video data and supplemental data.

The further sensor may comprise at least one of: a skin sensor integrated into customer controls of the ATM; an infra-red camera, and a microphone.

The processing subsystem may comprise a feature extraction module that is configured to extract features from the video data (and optionally to extract features from the supplemental data) that encode the affective state and/or changes in the affective state of the customer.

The feature extraction module may be configured to extract at least one of: eye movement, pupil dilation, facial expression, head pose, body posture, and movement of the customer.

The feature extraction module may comprises an artificial neural network (e.g. a convolutional neural network).

The processing subsystem may comprise an affect detection module, configured to receive the extracted features from the video data and to determine an affective state of the customer in dependence on the extracted features.

The affect detection module may comprise an artificial neural network.

The ATM may comprises a further camera for obtaining a serial number of each bank note dispensed from the ATM.

The counter measures may include: refusing to perform the action at the ATM (e.g. refusing to dispense cash); recording the serial number of each bank note that is dispensed during the action; sending a message to a third party indicating the serial number of each bank note that has been dispensed under duress; sending a message to a third party indicating that the customer needs assistance.

The third party may comprise a law enforcement authority (e.g. police).

The third party may comprise an issuing bank with which the customer is attempting to conduct the action (e.g. financial transaction).

According to a second aspect, there is provided a computer implemented method for improving security, comprising:
obtaining video of customer while the customer is operating an ATM;
processing the video to determine an affective state of the customer;
automatically determining, from the affective state, whether the customer is under duress while they are operating the ATM;
enacting counter-measures if it is determined that the customer is under duress.

The method according to the second aspect may comprise using a system according to the first aspect, including any of the optional feature thereof.

According to a third aspect, there is provided a non-volatile machine readable medium, storing instructions for configuring a processing system to perform the method according to the second aspect.

### Brief description of the drawings

Example embodiments of the invention will now be described, with reference to the following drawings, in which:
Figure 1 is a schematic of a system according to an embodiment, comprising an ATM with a camera and a processing subsystem configured to determine an affective state of a customer;
Figure 2 is a schematic of a system according to an embodiment, comprising an ATM with a camera and a remote processing subsystem configured to determine an affective state of a customer;
Figure 3 illustrates an example processing subsystem comprising a feature extraction module and an affect detection module; and
Figure 4 is a method according to an embodiment.

### Detailed description

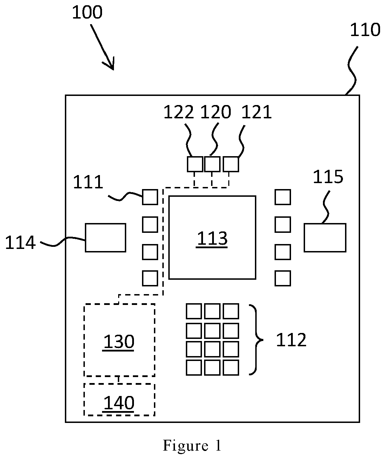

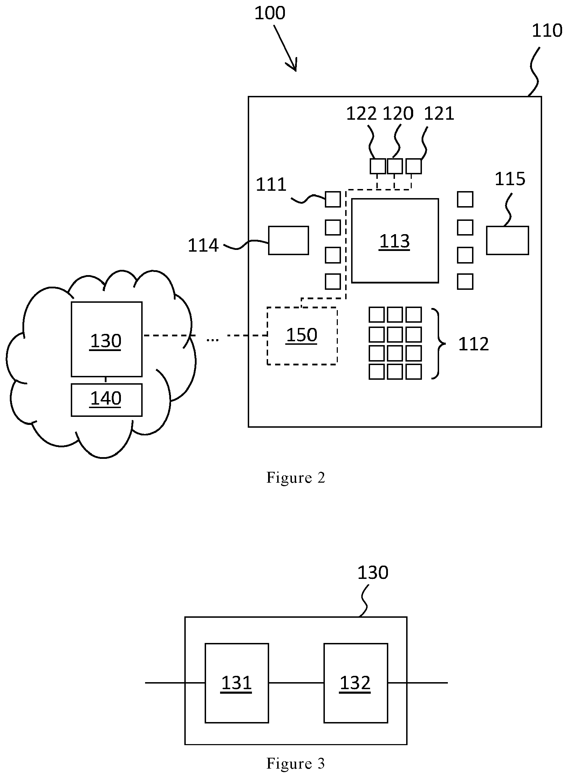

Figures 1 and 2 show a system 100 for improving security according to an embodiment, comprising an ATM 110. The ATM 110 comprises a display 113, customer controls 111, 112, card reader 114, cash-dispenser 115, video camera 120, supplemental sensors 121, 122, processing subsystem 130 and decision module 140.

The display 113 is configured to provide a user interface, prompting the customer on how to operate the ATM 110 in order to complete whatever action is required, for example checking a balance, or withdrawing cash.

The customer controls include a numerical keypad 112 that comprises number keys, so that the user can input their PIN and provide numerical amounts for actions to be authorised at the ATM. In some embodiments the ATM may alternatively comprise a touchscreen, or a keypad with a greater (or fewer) number of keys. In addition to the keypad 112, the customer controls comprise keys 111 adjacent to the screen 113, from which the user can select from choices displayed on the screen 113.

The card reader 114 may comprise any suitable means for reading account information from the card (or other security device), such as a magnetic strip reader, chip reader or NFC reader.

The cash dispenser 115 is configured to dispense cash in the form of bank notes to the customer and may comprise a further camera that is operable to read and record the serial number of each bank note that is dispensed therefrom.

As in a conventional ATM 110, a customer initiates an action (e.g. a financial transaction) by presenting their card (or other security device) to the card reader 113, which reads customer account details from the card. The ATM 110 subsequently requests authorisation credentials from the user (e.g. via a prompt on the screen 113) in order to proceed with any actions. The authorisation credentials are typically provided by the customer in the form of a PIN via the keypad 112.

In embodiments, the system 100 determines, from sensors (including camera 120) that are co-sited with the ATM (either as part of the ATM, or installed proximate to the ATM), whether a customer is likely to be under duress, and takes appropriate action to prevent or mitigate crimes. In this example embodiment, the camera 120 and other sensors 121, 122 are integrated with the ATM, but this is not essential. In some embodiments the functionality described herein may be added to an existing ATM by deployment of a suitable kit of sensors at (or near, e.g. within 2 metres) the ATM, which communicate with a processing subsystem 130 and decision module 140 which may be remote from the ATM 110.

The camera 120 is configured to capture a video of the customer while they are interacting with the ATM 110. The camera 120 may comprise more than one camera module, such as a wide angle module to capture the approach of the customer to the ATM (and any third parties that may be present), and a face capture camera module with a narrower field of view that is configured to clearly capture the customer's face while they are operating the ATM. In certain embodiments, cameras may be employed that are further than 2 metres from the ATM, for example facing the ATM from another side of a street, or on a lamp-post or other elevated position nearby.

The camera 120 provides video data of the customer operating the ATM 110 to the processing subsystem 130.

Supplemental sensors 121, 122 may comprise an infra-red camera module 121 and a microphone 122. Some embodiments may omit the supplemental sensors, relying solely on the video data from the camera to determine an affective state of the customer.

In certain embodiments, the cash dispenser 115 may comprise a camera that is operable to read a serial number of each bank note that is dispensed from the ATM. The cash dispenser camera may be activated only when it is determined that the customer is under duress.

The processing subsystem 130 and decision module 140 in the example of Figure 1 are integrated with the ATM. In the alternative embodiment of Figure 2, the ATM further comprises a communications module 150, which receives the video data from the camera 120 (and any supplemental sensor data from supplemental sensors 121, 122), and communicates the video data (and supplemental data) to a remote processing subsystem 130, which may be proximate the ATM (e.g. within 5m of the ATM), or remote from the ATM, for example hosted in a remote server or cloud based machine (which may be virtual and/or hosted by the issuing bank and/or a payment network). The communications module may be configured to communicate wirelessly (e.g. using WiFi), and/or via a wired connection (e.g. ethernet or similar).

Regardless of where the processing subsystem 130 and decision module 140 are physically located (and regardless of how they are implemented) their operation in a general sense is described below. In certain embodiments at least one of the processing subsystem 130 and decision module 140 may be implemented using any of a general purpose processing unit (e.g. CPU), graphics processing unit (GPU) and/or a neural computing unit (NPU).

The processing subsystem 130 is configured to process the video data and any supplemental data (e.g. from the microphone) to determine an affective state of the customer (e.g. their emotional state or their stress level).

The processing subsystem 130 may employ a machine learning algorithm to the video data (and supplemental data), such as an artificial neural network (ANN). In certain embodiments the ANN may be configured to receive the video data (and optionally the supplemental data) and directly process this to determine affective state. The dimensionality of the video data (and supplemental data, if present) may be relatively high, which may mean that such an approach is may be more difficult to train and/or less efficient. Conversely, such an approach may be advantageous where sufficient computing resources can be brought to bear.

In embodiments where the processing subsystem 130 employs a machine learning algorithm directly to the video data (and supplemental data), the machine learning algorithm may comprise an artificial neural network (ANN). The ANN may comprise a plurality of layers. Each layer of the ANN may comprise a convolution function, an activation function and a pooling function. The successive layers of the ANN may reduce the dimensionality of the input data, to produce at least one classification or score which rates the affective state of the customer. ANNs may be well suited to determining an affective status from video data, but other machine learning approaches may also be used.

In certain embodiments, the processing subsystem 130 may partition the problem into: i) feature extraction, in which features with reduced dimensionality are extracted from which an affective state of the customer can be determined, and ii) affect detection, in which an affective state is determined from the extracted features.

Figure 3 shows an example embodiment of such a processing subsystem 130, comprising a feature extraction module 131 and an affect detection module 132.

The feature extraction module 131 is configured to extract features from the video data (and supplemental data) from which an affective state can be determined (the extracted features having reduced dimensionality). The affect detection module 132 is configured to determine an affective state of the customer from the extracted features (and to provide this to the decision module 140). The feature extraction module 131 may comprise a first ANN, and the affect detection module 132 may comprise a second ANN.

The first ANN may comprise a plurality of layers. Each layer of the first ANN may comprise a convolution function, an activation function and a pooling function. The successive layers of the first ANN may reduce the dimensionality of the input data, to produce a feature vector that encodes information from which affective state can be determined (e.g. facial expression, pose etc).

The second ANN may comprise a plurality of layers. Each layer of the second ANN may comprise a convolution function, an activation function and a pooling function. The second ANN may determine an affective state of the customer from the output of the first ANN.

In some embodiments, both the feature extraction module 131 and affect detection module 132 may run on the same physical processing means (CPU, GPU, NPU etc), but they may also be implemented on different processing means.

In certain embodiments the processing subsystem 130 may be configured to determine a pose of the face of the user (i.e. the orientation of the face), and subsequently to segment the customer's face into regions from which features of the face can be determined. For example, the face may be segmented to isolate different regions of the face, and masked video data corresponding with each identified region processed to extract features for further processing (to determine affective state).

In some embodiments the processing subsystem 130 may be configured to process supplemental audio data to determine language content. The language content may be analysed to determine whether the customer is under duress.

In some embodiments, the ATM controls 111, 112 may be configured to detect skin characteristics of the customer, such as galvanic skin response, and/or capacitance. Under some circumstances, these may indicate that the customer is under stress/and or duress.

In embodiments that comprise an infra-red camera, the skin temperature of the customer may be used in determining whether the customer is under duress.

It will be appreciated that fusing data from multiple sensing modalities in this way may improve the certainty with which customer duress can be detected.

Regardless of what method is used by the processing subsystem, the processing subsystem 130 may output a score indicative of the likelihood that the customer is under duress. In other embodiments, the processing subsystem 130 may output a set of parameters that can be used to determine (e.g. by a weighted sum) whether the customer is under duress. Such parameters may include: a stress score and/or a fear score.

The decision module 140 is configured to receive the affective state determined by the processing subsystem 130 and to determine whether the customer is under duress. In embodiments where the affective state comprises a score indicative of the likelihood that the customer is under duress, a simple threshold may be used to decide whether a customer is under duress. In embodiments where a set of parameters (i.e. more than one) is provided to indicate affective state, the decision module 140 may calculate a weighted sum of the affective state parameters in order to determine whether the customer is under duress.

In some embodiments the decision module 140 may be implemented by the issuing bank, so that the issuer can decide what action is appropriate in response to an affective state of the customer. The issuing bank may provide the decision module 140 with additional information about the customer (and optionally may provide non-customer related information) in order to enable appropriate counter measures to be taken.

The decision module 140 is configured to take counter measures (which may prevent or mitigate crime) in the event that the customer is determined to be under duress. Such counter measures may include preventing the action (e.g. not allowing the customer to withdraw cash), and allowing the action to proceed but taking further action. In addition to deciding whether to allow the action to proceed, the counter-measures available from the decision module may comprise: recording the serial number of each bank note dispensed with the customer under duress, notifying a law enforcement authority that the customer is withdrawing cash under duress (e.g. including notifying the law enforcement authority the serial numbers of the bank notes), recording that the action was under duress, and/or requesting immediate attendance and assistance from a third party (such as a law enforcement authority).

The appropriate counter measures may be determined with reference to customer information and non-customer information that may be provided to the decision module (e.g. from an issuing bank, or from publicly available information sources). For example, if the ATM 110 is in an area with a high incidence of violent crime, and/or the ATM user is categorised as vulnerable (e.g. a minor), the counter measures may comprise completing the action and taking further counter-measures (e.g. selected from the above examples).

In some embodiments, the preferences of the customer may be taken into account by the decision module 140. For example, a customer may indicate to his issuing bank that he wants any cash withdrawals under duress to be blocked. Under these circumstances, the decision module 140 may block requests to withdraw cash that are determined to be under duress (without limitation on other actions that may also be taken by the decision module, such alerting a third party etc).

In order to ensure that appropriate counter-measures are taken, the decision module 140 may be configured to take into account a confidence level with which is can be established that the customer is under duress. The counter measures may be categorised, based on the required confidence level for enacting them.

For example, where the output from the processing subsystem comprises a score indicative of the likelihood that the customer is under duress (ranging between 0 and 1, with 1 indicating that the processing subsystem is as certain as it can be that the customer is under duress), different thresholds may be set for different counter-measures. A score between 0.5 and 0.7 may prompt the decision module merely to record that the action was probably under duress, for later investigation. A score greater than 0.7 may result in the action being refused. A score greater than 0.95 may result in authorities being contacted. These thresholds are merely illustrative, and different classifications and thresholds may be selected in order to balance negative consequences that may arise from falsely determining that an action was under duress with the positive results that flow from taking appropriate action when duress is successfully detected.

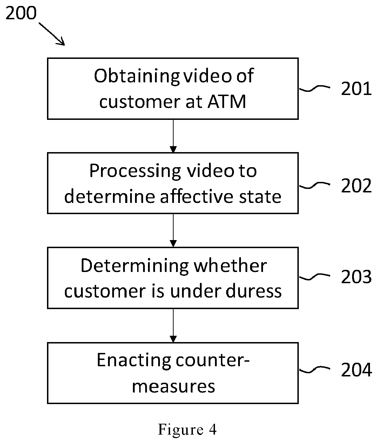

Referring to Figure 4, an example method 200 according to an embodiment is shown. At least some of the steps of the method are computer implemented (and all the steps may be). At step 201, a video of the customer using the ATM is obtained. The video preferably includes a clear view of the customer's face, and may also include a wider angle view of their body (enabling gait/posture analysis). The video may be obtained using hardware as described above (or similar). Step 201 may additionally comprise obtaining supplemental sensor information, which may comprise at least one of: infra-red imagery and/or video, audio, and skin sensor output. At step 202, the video (and any supplemental sensor information) is processed to determine an affective state of the customer. Such processing may be implemented as described above. At step 203, a determination as to whether the customer is under duress is made, in dependence on the affective state determined at step 202. At step 204, counter measures are enacted, with the objective of mitigating or preventing crime and/or fraud. The counter measures may be as already described.

Although specific embodiments have been described, variations are possible, and the scope of the invention should be determined with reference to the accompanying claims.

## Claims

1. A system for improving security, comprising:
an ATM at which a customer can perform an action;
a camera configured to view the customer when they are using the ATM to perform a transaction;
a processing subsystem configured to receive video data from the camera, and to process the video data to determine an affective state of the customer;
a decision module, configured to receive the affective state determined by the processing subsystem, and to take counter measures if the affective state indicates that the customer is under duress.

2. The system of claim 1, wherein the ATM comprises the camera.

3. The system of claim 1 or 2, further comprising at least one supplemental sensor with a different sensing modality to the camera, wherein the processing subsystem receives supplemental data from the at least one supplemental sensor in addition to the video data, and determines the affective state of the customer in dependence on both the video data and supplemental data.

4. The system of claim 3, wherein the further sensor comprises at least one of: a skin sensor integrated into customer controls of the ATM; an infra-red camera, and a microphone.

5. The system of any preceding claim, wherein the processing subsystem comprises a feature extraction module, that is configured to extract features from the video data that encode the affective state and/or changes in the affective state of the customer.

6. The system of claim 5, wherein the feature extraction module is configured to extract at least one of: eye movement, pupil dilation, facial expression, head pose, body posture, and movement of the customer.

7. The system of claim 5 or 6, wherein the feature extraction module comprises an artificial neural network.

8. The system of any one of claims 5 to 7, wherein the processing subsystem comprises an affect detection module, configured to receive the extracted features from the video data and to determine an affective state of the customer in dependence on the extracted features.

9. The system of claim 8, wherein the affect detection module comprises an artificial neural network.

10. The system of any preceding claim, wherein the ATM comprises a camera for obtaining a serial number of each bank note dispensed from the ATM.

11. The system of any preceding claim, wherein the counter measures include: refusing to perform the action at the ATM; recording the serial number of each bank note that is dispensed during the action; sending a message to a third party indicating the serial number of each bank note that has been dispensed under duress; sending a message to a third party indicating that the customer needs assistance.

12. The system of claim 11, wherein the third party comprises a law enforcement authority.

13. The system of claim 11 or 12, wherein the third party comprises an issuing bank with which the customer is attempting to conduct the action.

14. A computer implemented method for improving security, comprising:
obtaining video of customer while the customer is operating an ATM;
processing the video to determine an affective state of the customer;
automatically determining, from the affective state, whether the customer is under duress while they are operating the ATM;
enacting counter-measures if it is determined that the customer is under duress.

15. A non-volatile machine readable medium, storing instructions for configuring a processing system to perform the method of claim 14.
